# EUROPEAN PATENT APPLICATION

(11) **EP 4 550 204 A1**
(43) Date of publication of application: **07.05.2025**
(21) Application number: 24210019.6
(22) Date of filing: 31.10.2024
(51) Int. Cl.: G06F 30/3308, G06F 30/20, G06F 13/42, G06F 115/02, G06F 119/12

(54) **METHOD AND SYSTEM FOR REDUCING EFFICIENCY CALCULATING TIME AND COMPUTER READABLE RECORDING MEDIUM**

(30) Priority: 01.11.2023 US 202363594960 P; 14.08.2024 TW 113130469
(71) Applicant: Microip Inc., Victoria, Mahe (SC)
(72) Inventor: LIU, Pei-Ying, 300196 Hsinchu City (TW); LU, Shao-Jung, 300196 Hsinchu City (TW); CHENG, Hsiang-Lung, 300196 Hsinchu City (TW)
(74) Representative: Scintilla Intellectual Property Ltd

(57) **Abstract**

A method for reducing efficiency calculating time includes reading the waveform recording profile from a database, the waveform recording profile includes a plurality of waveform signal information corresponding to the bus structure; retrieving a part of the waveform signal information corresponding to a designated list from the waveform recording profile; mapping the part of the waveform signal information to a plurality of transmitting signal information of a plurality of connecting ports to generate a mapped waveform recording profile, any one of the connecting ports is configured to connect two of the nodes; defining a plurality of timestamps of each of the connecting ports according to a designated voltage level of each of the transmitting signal information; and driving the processor to integrate the mapped waveform recording profile and the timestamps to generate the efficiency analyzing information.

## Description

### BACKGROUND

### Technical Field

The present disclosure relates to a method and a system for reducing calculating time and a computer readable recording medium. More particularly, the present disclosure relates to a method and a system for reducing efficiency calculating time and a computer readable recording medium.

### Description of Related Art

Due to the increase of the efficiency and the functions of the conventional System On a Chip (SOC), the circuit complexity of the SOC also increases, the data transmission between nodes and different buses are more common. However, the conventional efficiency analyzing method records the waveform and signal variation of all the nodes in the SOC, hence, the data amount is huge. Thus, reading the waveform signal of each of the nodes from the waveform recording profile and obtaining a data amount, a transmitting time, a transmitting beginning time and a transmitting ending time takes a lot of computing time and also needs to be computed by a processor with better performance to calculate the transmission performance.

Therefore, a method and a system for reducing efficiency calculating time and a computer readable recording medium which can reduce the computing data amount are commercially desirable.

### SUMMARY

According to one aspect of the present disclosure, a method for reducing efficiency calculating time, which is configured to transform a waveform recording profile of a bus structure into an efficiency analyzing information so as to analyze a transmission efficiency of a transmission instruction. The method for reducing efficiency calculating time includes driving a processor to read the waveform recording profile from a database, the waveform recording profile includes a plurality of waveform signal information corresponding to the bus structure; driving the processor to retrieve a part of the waveform signal information corresponding to a designated list from the waveform recording profile, the designated list is corresponding to a plurality of nodes of the bus structure; driving the processor to map the part of the waveform signal information to a plurality of transmitting signal information of a plurality of connecting ports to generate a mapped waveform recording profile, any one of the connecting ports is configured to connect two of the nodes; driving the processor to define a plurality of timestamps of each of the connecting ports according to a designated voltage level of each of the transmitting signal information; and driving the processor to integrate the mapped waveform recording profile and the timestamps to generate the efficiency analyzing information.

According to the method for reducing efficiency calculating time of the aforementioned aspect, the waveform recording profile includes one of an IEEE 1364 Value Change Dump (VCD) profile, a Fast Signal Data Base (FSDB) profile and a Signal Value profile.

According to the method for reducing efficiency calculating time of the aforementioned aspect, when one of the nodes initiates a data transmission to another one of the nodes, the timestamps of one of the connecting ports between the one and the another one of the nodes includes a first timestamp, a second timestamp, a third timestamp, a fourth timestamp and a fifth timestamp. The first timestamp is corresponding to a time point when the one of the nodes initiates an address communicating request. The second timestamp is corresponding to a time point when the another one of the nodes replies the address communicating request. The third timestamp is corresponding to a time point when the one of the nodes transmits a data. The fourth timestamp is corresponding to a time point when the another one of the nodes receives the data. The fifth timestamp is corresponding to a time point when the data is transmitted.

According to the method for reducing efficiency calculating time of the aforementioned aspect, the timestamps further includes a sixth timestamp and a seventh timestamp. The sixth timestamp is corresponding to a time point when the another one of the nodes requests to establish a reply channel. The seventh timestamp is corresponding to a time point when the one of the nodes receives the reply channel being established.

According to the method for reducing efficiency calculating time of the aforementioned aspect, the method for reducing efficiency calculating time further includes driving the processor to calculate the transmission efficiency of the nodes of the bus structure according to the timestamps of each of the connecting ports.

According to the method for reducing efficiency calculating time of the aforementioned aspect, the method for reducing efficiency calculating time further includes driving the processor to generate an efficiency abnormal alert information when the transmission efficiency is not conform to a predetermined value.

According to the method for reducing efficiency calculating time of the aforementioned aspect, the method for reducing efficiency calculating time further includes driving the processor to transform the efficiency analyzing information into a transmission recording table, the transmission recording table includes a connecting port code, a time value, one of the timestamps, a terminal node and a data transmission amount of each of a plurality of data transmission behaviors between the nodes; driving the processor to store the data transmission behaviors into a plurality of queues according to the one of the timestamps corresponding to each of the data transmission behaviors, output one of a part of the data transmission behaviors of each of the queues in a first-in, first-out sequence to combine the one of the part of the data transmission behaviors of each of the queues into a data stream, and combine the data transmission behaviors of the queues into a plurality of the data streams; driving the processor to compare a plurality of the connecting port codes, a plurality of the time values, a plurality of the terminal nodes and a plurality of the data transmission amounts of each of the data streams with a transmission port, a transmitting time, a receiving port and a data amount of a data transmitted by the transmission instruction to determine whether each of the data streams is corresponding to one of the connecting port codes or not; and driving the processor to store a part of the data streams, which is corresponding to the connecting port codes, to a register, and calculate the transmission efficiency of the transmission instruction according to the part of the data streams.

According to another aspect of the present disclosure, a system for reducing efficiency calculating time, which is configured to transform a waveform recording profile of a bus structure into an efficiency analyzing information so as to analyze a transmission efficiency of a transmission instruction. The system for reducing efficiency calculating time includes a database and a processor. The database is signally connected to the bus structure, and includes the waveform recording profile and a designated list. The waveform recording profile includes a plurality of waveform signal information corresponding to the bus structure. The designated list is corresponding to a plurality of nodes of the bus structure, and corresponding to a part of the waveform signal information. The processor is signally connected to the database, and is configured to implement a method for reducing efficiency calculating time. The method for reducing efficiency calculating time includes reading the waveform recording profile; retrieving the part of the waveform signal information corresponding to the designated list from the waveform recording profile; mapping the part of the waveform signal information to a plurality of transmitting signal information of a plurality of connecting ports of the bus structure to generate a mapped waveform recording profile, any one of the connecting ports is configured to connect two of the nodes; defining a plurality of timestamps of each of the connecting ports according to a designated voltage level of each of the transmitting signal information; and integrating the mapped waveform recording profile and the timestamps to generate the efficiency analyzing information.

According to the system for reducing efficiency calculating time of the aforementioned aspect, the waveform recording profile includes one of an IEEE 1364 Value Change Dump profile, a Fast Signal Data Base profile and a Signal Value profile.

According to the system for reducing efficiency calculating time of the aforementioned aspect, when one of the nodes initiates a data transmission to another one of the nodes, the timestamps of one of the connecting ports between the one and the another one of the nodes includes a first timestamp, a second timestamp, a third timestamp, a fourth timestamp and a fifth timestamp. The first timestamp is corresponding to a time point when the one of the nodes initiates an address communicating request. The second timestamp is corresponding to a time point when the another one of the nodes replies the address communicating request. The third timestamp is corresponding to a time point when the one of the nodes transmits a data. The fourth timestamp is corresponding to a time point when the another one of the nodes receives the data. The fifth timestamp is corresponding to a time point when the data is transmitted.

According to the system for reducing efficiency calculating time of the aforementioned aspect, the timestamps further includes a sixth timestamp and a seventh timestamp. The sixth timestamp is corresponding to a time point when the another one of the nodes requests to establish a reply channel. The seventh timestamp is corresponding to a time point when the one of the nodes receives the reply channel being established.

According to the system for reducing efficiency calculating time of the aforementioned aspect, the processor is configured to implement the method for reducing efficiency calculating time further includes calculating the transmission efficiency of the nodes of the bus structure according to the timestamps of each of the connecting ports.

According to the system for reducing efficiency calculating time of the aforementioned aspect, the processor is configured to implement the method for reducing efficiency calculating time further includes generating an efficiency abnormal alert information when the transmission efficiency is not conform to a predetermined value.

According to the system for reducing efficiency calculating time of the aforementioned aspect, the processor is configured to implement the method for reducing efficiency calculating time further includes transforming the efficiency analyzing information into a transmission recording table, the transmission recording table includes a connecting port code, a time value, one of the timestamps, a terminal node and a data transmission amount of each of a plurality of data transmission behaviors between the nodes; storing the data transmission behaviors into a plurality of queues according to the one of the timestamps corresponding to each of the data transmission behaviors, outputting one of a part of the data transmission behaviors of each of the queues in a first-in, first-out sequence to combine the one of the part of the data transmission behaviors of each of the queues into a data stream, and combining the data transmission behaviors of the queues into a plurality of the data streams; comparing a plurality of the connecting port codes, a plurality of the time values, a plurality of the terminal nodes and a plurality of the data transmission amounts of each of the data streams with a transmission port, a transmitting time, a receiving port and a data amount of a data transmitted by the transmission instruction to determine whether each of the data streams is corresponding to one of the connecting port codes or not; and storing a part of the data streams, which is corresponding to the connecting port codes, to a register, and calculating the transmission efficiency of the transmission instruction according to the part of the data streams.

According to another aspect of the present disclosure, a computer readable recording medium stores a program for a processor capable of transforming a waveform recording profile of a bus structure into an efficiency analyzing information so as to analyze a transmission efficiency of a transmission instruction, to execute a method for reducing efficiency calculating time. The method for reducing efficiency calculating time includes driving the processor to read the waveform recording profile from a database, the waveform recording profile includes a plurality of waveform signal information corresponding to the bus structure; driving the processor to retrieve a part of the waveform signal information corresponding to a designated list from the waveform recording profile, the designated list is corresponding to a plurality of nodes of the bus structure; driving the processor to map the part of the waveform signal information to a plurality of transmitting signal information of a plurality of connecting ports to generate a mapped waveform recording profile, any one of the connecting ports is configured to connect two of the nodes; driving the processor to define a plurality of timestamps of each of the connecting ports according to a designated voltage level of each of the transmitting signal information; and driving the processor to integrate the mapped waveform recording profile and the timestamps to generate the efficiency analyzing information.

According to the computer readable recording medium of the aforementioned aspect, the waveform recording profile includes one of an IEEE 1364 Value Change Dump profile, a Fast Signal Data Base profile and a Signal Value profile.

According to the computer readable recording medium of the aforementioned aspect, when one of the nodes initiates a data transmission to another one of the nodes, the timestamps of one of the connecting ports between the one and the another one of the nodes includes a first timestamp, a second timestamp, a third timestamp, a fourth timestamp and a fifth timestamp. The first timestamp is corresponding to a time point when the one of the nodes initiates an address communicating request. The second timestamp is corresponding to a time point when the another one of the nodes replies the address communicating request. The third timestamp is corresponding to a time point when the one of the nodes transmits a data. The fourth timestamp is corresponding to a time point when the another one of the nodes receives the data. The fifth timestamp is corresponding to a time point when the data is transmitted.

According to the computer readable recording medium of the aforementioned aspect, the timestamps further includes a sixth timestamp and a seventh timestamp. The sixth timestamp is corresponding to a time point when the another one of the nodes requests to establish a reply channel. The seventh timestamp is corresponding to a time point when the one of the nodes receives the reply channel is established.

According to the computer readable recording medium of the aforementioned aspect, the processor is configured to execute the method for reducing efficiency calculating time further includes driving the processor to calculate the transmission efficiency of the nodes of the bus structure according to the timestamps of each of the connecting ports; and driving the processor to generate an efficiency abnormal alert information when the transmission efficiency is not conform to a predetermined value.

According to the computer readable recording medium of the aforementioned aspect, the processor is configured to execute the method for reducing efficiency calculating time further includes driving the processor to transform the efficiency analyzing information into a transmission recording table, the transmission recording table includes a connecting port code, a time value, one of the timestamps, a terminal node and a data transmission amount of each of a plurality of data transmission behaviors between the nodes; driving the processor to store the data transmission behaviors into a plurality of queues according to the one of the timestamps corresponding to each of the data transmission behaviors, output one of a part of the data transmission behaviors of each of the queues in a first-in, first-out sequence to combine the one of the part of the data transmission behaviors of each of the queues into a data stream, and combine the data transmission behaviors of the queues into a plurality of the data streams; driving the processor to compare a plurality of the connecting port codes, a plurality of the time values, a plurality of the terminal nodes and a plurality of the data transmission amounts of each of the data streams with a transmission port, a transmitting time, a receiving port and a data amount of a data transmitted by the transmission instruction to determine whether each of the data streams is corresponding to one of the connecting port codes or not; and driving the processor to store a part of the data streams, which is corresponding to the connecting port codes, to a register, and calculate the transmission efficiency of the transmission instruction according to the part of the data streams.

### BRIEF DESCRIPTION OF THE DRAWINGS

The present disclosure can be more fully understood by reading the following detailed description of the embodiment, with reference made to the accompanying drawings as follows:
Fig. 1 shows a block diagram of a system for reducing efficiency calculating time according to a first embodiment of the present disclosure.
Fig. 2 shows a flow chart of a method for reducing efficiency calculating time according to a second embodiment of the present disclosure.
Fig. 3 shows a flow chart of the steps of the method for reducing efficiency calculating time of Fig. 2.
Fig. 4 shows a mapping operation interface of the method for reducing efficiency calculating time of Fig. 2.
Fig. 5 shows a flow chart of the step of the method for reducing efficiency calculating time of Fig. 2.
Fig. 6 shows the transmitting signal information of the method for reducing efficiency calculating time of Fig. 2.
Fig. 7 shows a flow chart of a method for reducing efficiency calculating time according to a third embodiment of the present disclosure.
Fig. 8A shows a flow chart of a part of a method for reducing efficiency calculating time according to a fourth embodiment of the present disclosure.
Fig. 8B shows a flow chart of another part of the method for reducing efficiency calculating time according to the fourth embodiment of the present disclosure.
Fig. 9 shows a schematic view of the method for reducing efficiency calculating time in Fig. 8A and Fig. 8B applied to an Advanced Microcontroller Bus Architecture (AMBA).
Fig. 10 shows the step of the method for reducing efficiency calculating time of Fig. 8A and Fig. 8B.
Fig. 11 shows the queues of the method for reducing efficiency calculating time of Fig. 8A and Fig. 8B.
Fig. 12 shows the step of the method for reducing efficiency calculating time of Fig. 8A and Fig. 8B.
Fig. 13 shows a schematic view of a transmission efficiency of the method for reducing efficiency calculating time of Fig. 8A and Fig. 8B.

### DETAILED DESCRIPTION

The embodiment will be described with the drawings. For clarity, some practical details will be described below. However, it should be noted that the present disclosure should not be limited by the practical details, that is, in some embodiment, the practical details is unnecessary. In addition, for simplifying the drawings, some conventional structures and elements will be simply illustrated, and repeated elements may be represented by the same labels.

It will be understood that when an element (or device) is referred to as be "connected to" another element, it can be directly connected to other element, or it can be indirectly connected to the other element, that is, intervening elements may be present. In contrast, when an element is referred to as be "directly connected to" another element, there are no intervening elements present. In addition, the terms first, second, third, etc. are used herein to describe various elements or components, these elements or components should not be limited by these terms. Consequently, a first element or component discussed below could be termed a second element or component.

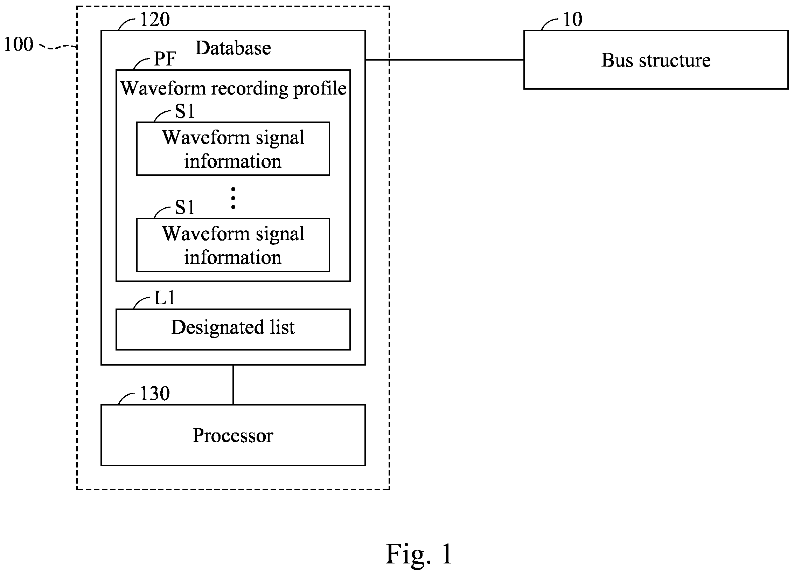

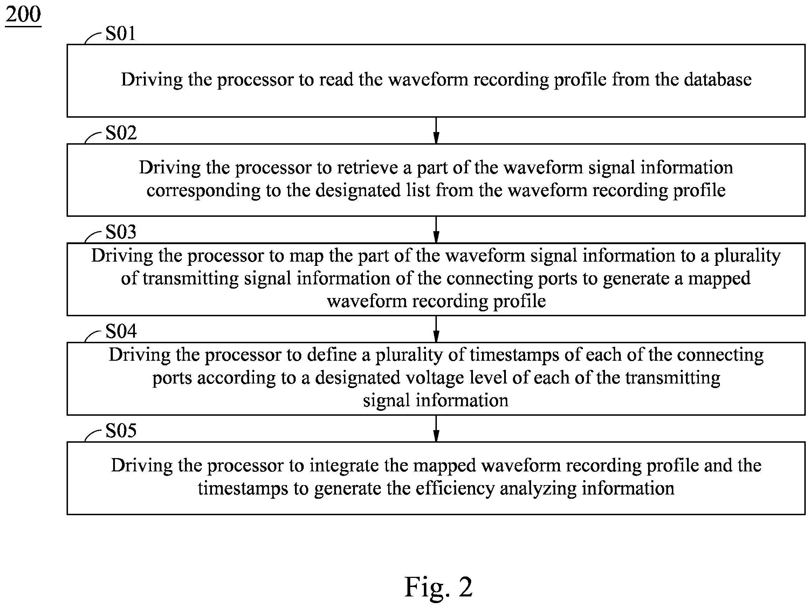

Please refer to Fig. 1 and Fig. 2. Fig. 1 shows a block diagram of a system 100 for reducing efficiency calculating time according to a first embodiment of the present disclosure. Fig. 2 shows a flow chart of a method 200 for reducing efficiency calculating time according to a second embodiment of the present disclosure. The system 100 for reducing efficiency calculating time includes a database 120 and a processor 130. The system 100 for reducing efficiency calculating time is configured to transform a waveform recording profile PF of a bus structure 10 into an efficiency analyzing information so as to analyze a transmission efficiency of a transmission instruction. The bus structure 10 includes a plurality of nodes and a plurality of connecting ports. Any one of the connecting ports is configured to connect two of the nodes. The database 120 is signally connected to the bus structure 10, and includes the waveform recording profile PF and a designated list L1. The waveform recording profile PF includes a plurality of waveform signal information S1 corresponding to the bus structure 10. The designated list L1 is corresponding to the nodes, and corresponding to a part of the waveform signal information S1. The processor 130 is signally connected to the database 120, and is configured to implement the method 200 for reducing efficiency calculating time.

In detail, the bus structure 10 can be the AMBA or other SOC in the Advanced RISC Machine (ARM), the database 120 can include a Random Access Memory (RAM) capable to store information and instruction for the processor 130 to process or other dynamic storing device, the processor 130 can include any type of processor, microprocessor, but the present disclosure is not limited thereto. The waveform recording profile PF records the waveform signal information S1 of the bus structure 10. The waveform signal information S1 includes a signal code, a voltage value and the time interval corresponded to the voltage value of each of the signal of each of the nodes. The waveform recording profile PF can include one of an IEEE 1364 Value Change Dump (VCD) profile, a Fast Signal Data Base (FSDB) profile, a Signal Value profile or other signal variation profile with other formats, but the present disclosure is not limited thereto.

The method 200 for reducing efficiency calculating time is configured to transform the waveform recording profile PF of the bus structure 10 into an efficiency analyzing information so as to analyze a transmission efficiency of a transmission instruction. The method 200 for reducing efficiency calculating time includes steps S01, S02, S03, S04, S05. The step S01 includes driving the processor 130 to read the waveform recording profile PF from the database 120. The waveform recording profile PF includes the waveform signal information S1 corresponding to the bus structure 10. The step S02 includes driving the processor 130 to retrieve a part of the waveform signal information S1 corresponding to the designated list L1 from the waveform recording profile PF. The designated list L1 is corresponding to the nodes of the bus structure 10. The step S03 includes driving the processor 130 to map the part of the waveform signal information S1 to a plurality of transmitting signal information of the connecting ports to generate a mapped waveform recording profile. Any one of the connecting ports is configured to connect two of the nodes. The step S04 includes driving the processor 130 to define a plurality of timestamps of each of the connecting ports according to a designated voltage level of each of the transmitting signal information. The step S05 includes driving the processor 130 to integrate the mapped waveform recording profile and the timestamps to generate the efficiency analyzing information. Thus, the system 100 for reducing efficiency calculating time of the present disclosure retrieves a part of the waveform signal information S1 without calculating all the waveform signal information S1 in the waveform recording profile PF, thereby reducing the computing data amount of the efficiency analyzation, shorten the analyzing computing time and increasing the computing speed.

In detail, the step S01 is performed to read the waveform recording profile PF of the bus structure 10 stored in the database 120. The step S02 is performed to retrieve a part of the waveform signal information S1 in the waveform recording profile PF, and the part of the waveform signal information S1 are listed in the designated list L1. The designated list L1 can be listed in Table 1. For example, the bus structure 10 includes M nodes (i.e., node 1, node 2-node M), the node 1 includes six waveform signal information S1, the node 2 includes seven waveform signal information S1, and the node M includes eight waveform signal information S1. The designated list L1 shows the signal names of the signals with the voltage level changes during the nodes 1, 2-M transmitting data. The voltage level of the signals changed while the nodes 1, 2-M transmitting data are listed in the designated list L1. In the step S02, three waveform signal information S1 of the node 1 corresponding to the designated list L1, five waveform signal information S1 of the node 2 corresponding to the designated list L1 and three waveform signal information S1 of the node M are sketched, and so on.

**Table 1**

| Node | 1 | 2 | ... | M |
|---|---|---|---|---|
| Signal name | CLK | ACLK | ... | CLK |
| | AWID | ARADDR | ... | HBUSREQ |
| | WID | ARVALID | ... | HGRANT |
| | | ARREADY | ... | |

Each adjacent two nodes in the bus structure 10 are connected via a connecting port, and transmit data via the connecting port. The step S03 is performed to match the waveform signal information S1 of each of the nodes record in the waveform recording profile PF with the transmitting signal information of the connecting ports to generate a mapped waveform recording profile. The details of the steps S01, S02, S03 will be described in more detail below.

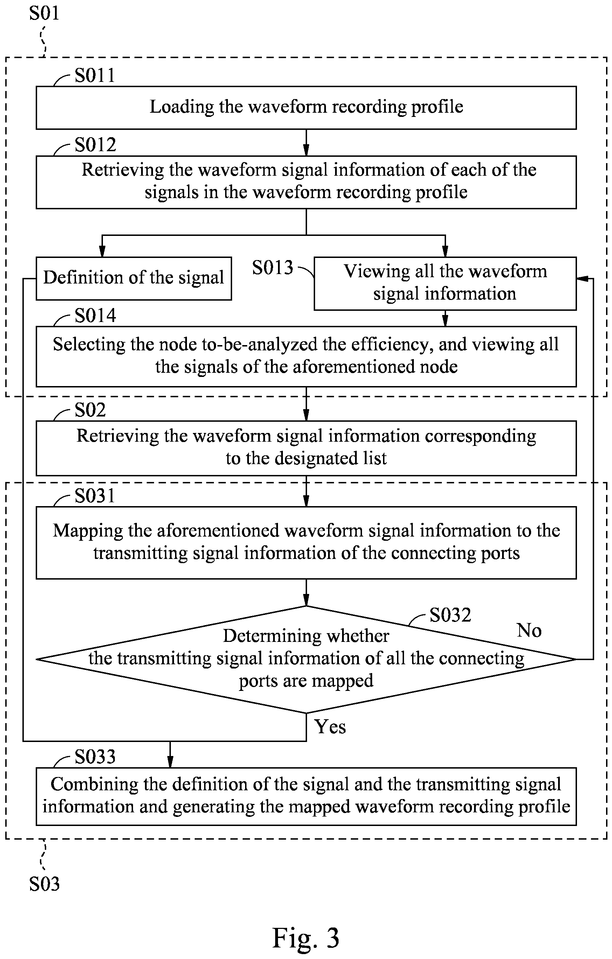

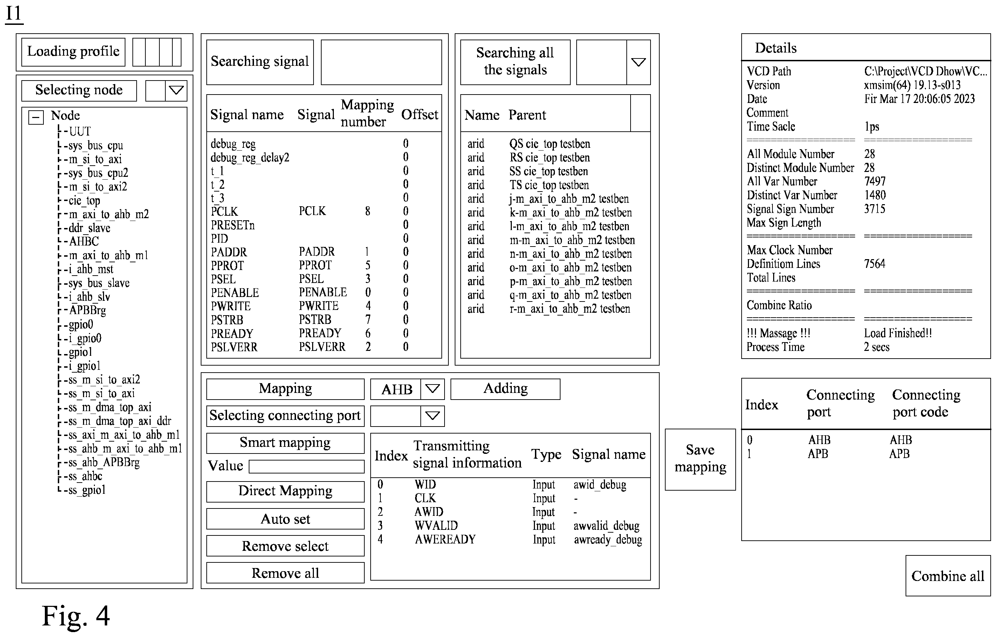

Please refer to Fig. 1 to Fig. 4. Fig. 3 shows a flow chart of the steps S01, S02, S03 of the method 200 for reducing efficiency calculating time of Fig. 2. Fig. 4 shows a mapping operation interface 11 of the method 200 for reducing efficiency calculating time of Fig. 2. The step S01 can include steps S011, S012, S013, S014. The step S03 can include the steps S031, S032, S033. The step S011 includes loading the waveform recording profile PF, and corresponding to a "loading profile" column in the mapping operation interface 11 of Fig. 4. The step S012 divides the waveform recording profile PF into the definition of the signal and the waveform signal information S1, and the step S013 is performed to process with the waveform signal information S1. The step S012 includes retrieving the waveform signal information S1 of each of the signals in the waveform recording profile PF. The waveform signal information S1 includes a time information, a voltage level variation and the signal name. The step S013 includes viewing all the waveform signal information S1. The step S014 includes selecting the node to-be-analyzed, and viewing all the signals of the aforementioned node. The steps S013, S014 can be corresponding to a "selecting node" column and a "searching signal" column of Fig. 4. The "selecting node" column lists all the nodes in the bus structure 10. The "searching signal" column lists all the signals of one of the nodes. The step S02 can include retrieving the waveform signal information S1 corresponding to the designated list L1. The step S031 includes mapping the aforementioned waveform signal information S1 to the transmitting signal information of the connecting ports, and is corresponding to a "mapping" column. The step S031 is performed to select the protocol type of the connecting port to-be-mapped, and map the waveform signal information S1, which is selected by the step S02, with the signal name of the transmitting signal information of the connecting port. The protocol type can include an Advanced High-performance (AHB) protocol, an Advanced Peripheral Bus (APB) protocol or an Advanced eXtensible Interface (AXI) protocol. The step S032 includes determining whether the transmitting signal information of all the connecting ports are mapped. If the transmitting signal information of all the connecting ports are mapped, the step S033 is performed, if the transmitting signal information of all the connecting ports are not mapped yet, the step S013 is performed. The step S033 includes combining the definition of the signal and the transmitting signal information and generating the mapped waveform recording profile. Moreover, the user can search any of the waveform signal information S1 in the bus structure 10 via the "searching all the signals" column.

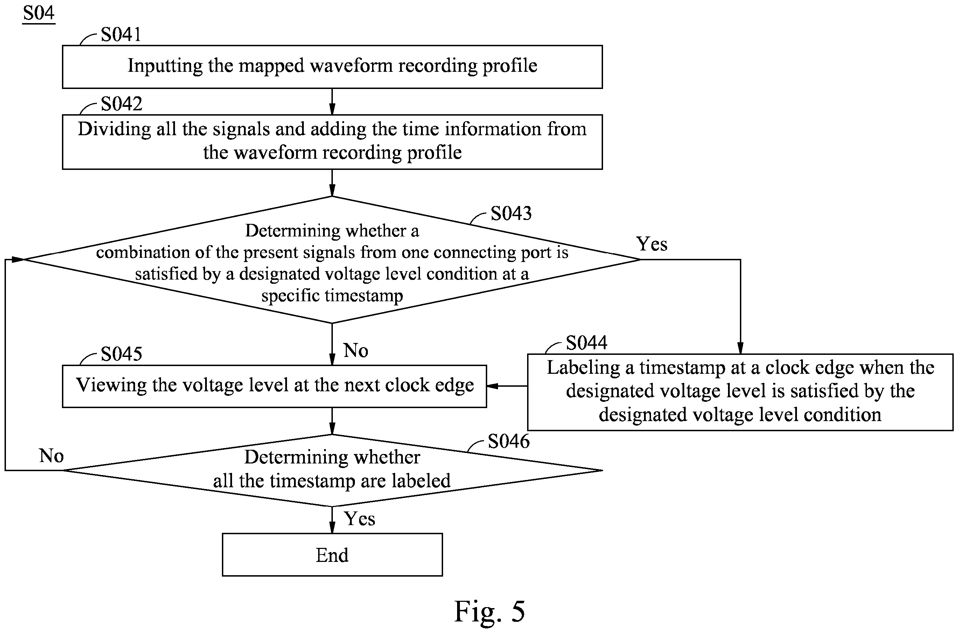

Please refer to Fig. 1, Fig. 2 and Fig. 5. Fig. 5 shows a flow chart of the step S04 of the method 200 for reducing efficiency calculating time of Fig. 2. The step S04 can include the steps S041, S042, S043, S044, S045, S046. The step S041 includes inputting the mapped waveform recording profile. The step S042 includes dividing all the signals and adding the time information from the waveform recording profile PF. The step S043 includes determining whether a combination of the present signals from one connecting port is satisfied by a designated voltage level condition at a specific timestamp. If the result of the step S043 is yes, the step S044 is performed, if the result of the step S043 is no, the step S045 is performed. The step S044 includes labeling a timestamp at a clock edge when the designated voltage level is satisfied by the designated voltage level condition. The step S045 includes viewing the voltage level at the next clock edge. The step S046 includes determining whether all the timestamp are labeled.

In detail, when one of the nodes initiates a data transmission to another one of the nodes, and the data transmission is reading data, a number of the timestamps of one of the connecting ports between the one and the another one of the nodes is five, and the timestamps includes a first timestamp, a second timestamp, a third timestamp, a fourth timestamp and a fifth timestamp. The first timestamp is corresponding to a time point when the one of the nodes initiates an address communicating request. The second timestamp is corresponding to a time point when the another one of the nodes replies the address communicating request. The third timestamp is corresponding to a time point when the one of the nodes transmits a data. The fourth timestamp is corresponding to a time point when the another one of the nodes receives the data. The fifth timestamp is corresponding to a time point when the data has been transmitted. When the data transmission is writing data, a number of the timestamps is seven, and the timestamps can further include a sixth timestamp and a seventh timestamp. The sixth timestamp is corresponding to a time point when the another one of the nodes requests to establish a reply channel. The seventh timestamp is corresponding to a time point when the one of the nodes receives the reply channel being established.

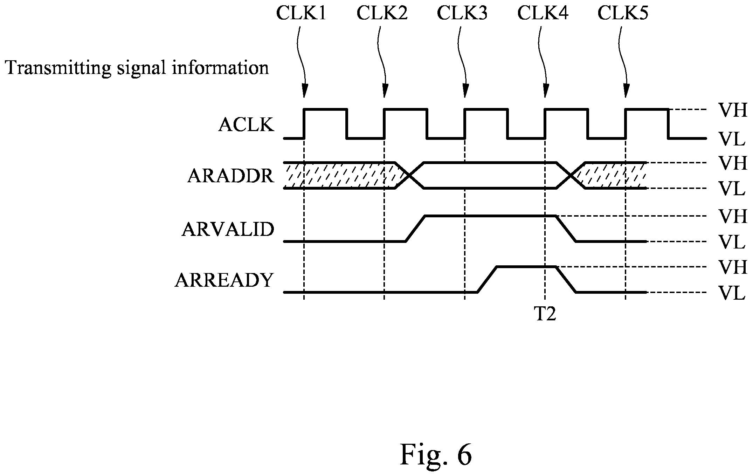

Please refer to Fig. 1, Fig. 2, Fig. 5 and Fig. 6. Fig. 6 shows the transmitting signal information ACLK, ARADDR, ARVALID, ARREADY of the method 200 for reducing efficiency calculating time of Fig. 2. Fig. 6 shows the voltage levels of the transmitting signal information ACLK, ARADDR, ARVALID, ARREADY of the connecting port corresponding to the node 2 at a first clock CLK1, a second clock CLK2, a third clock CLK3, a fourth clock CLK4 and a fifth clock CLK5. The transmitting signal information ACLK, ARADDR, ARVALID, ARREADY are switching between the high voltage level VH and the low voltage level VL. In the second embodiment, each of the timestamps has a designated voltage level condition, when the designated voltage level of each of the transmitting signal information ACLK, ARADDR, ARVALID, ARREADY is satisfied by the designated voltage level condition, the timestamps can be labeled at the corresponding clock edge. For instance, the node 2 is transmitting a data, a condition of the second timestamp T2 is the transmitting signal information ARVALID at high voltage level VH and the transmitting signal information ARREADY at high voltage level VH, that is, the transmitting signal information ARVALID, ARREADY are both at high voltage level at the fourth clock CLK4, the second timestamp T2 is labeled at the fourth clock CLK4. In other embodiments of the present disclosure, the voltage level condition of the timestamp of each of the connecting ports can be adjusted and set as required, but the present disclosure is not limited thereto.

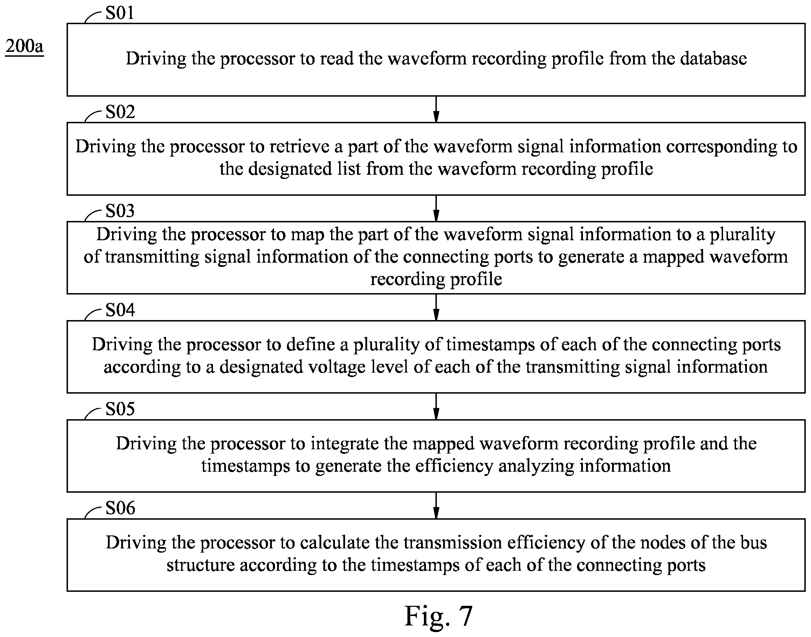

Please refer to Fig. 1, Fig. 2 and Fig. 7. Fig. 7 shows a flow chart of a method 200a for reducing efficiency calculating time according to a third embodiment of the present disclosure. The method 200a for reducing efficiency calculating time includes steps S01, S02, S03, S04, S05, S06. In the third embodiment, the steps S01, S02, S03, S04, S05 can be the same as the steps S01, S02, S03, S04, S05 of the method 200 for reducing efficiency calculating time of the second embodiment, and will not be described again. Further, the method 200a for reducing efficiency calculating time can further include the step S06. The step S06 includes driving the processor 130 to calculate the transmission efficiency of the nodes of the bus structure 10 according to the timestamps (i.e., the first timestamp, the second timestamp, the third timestamp, the fourth timestamp, the fifth timestamp, the sixth timestamp and the seventh timestamp) of each of the connecting ports. In detail, after obtaining the timestamps of all the connecting ports, the mapped waveform recording profile can be combined with the timestamps to generate the efficiency analyzing information, and a transmission efficiency can be calculated according to the timestamps in the efficiency analyzing information. Thus, the method 200a for reducing efficiency calculating time of the present disclosure can calculate the state of each of the timestamps during the data transmission accurately, and find out the interval with abnormal transmitting speed, thereby clearing the abnormal problem effectively.

In other embodiments of the present disclosure, the method for reducing efficiency calculating time can further generate an efficiency abnormal alert information when the transmission efficiency is not conform to a predetermined value. In detail, the method for reducing efficiency calculating time can compare the time interval between all the timestamps with a predetermined value of the timestamps of the historical transmitting information. When the time interval between two of the adjacent timestamps is much bigger than the predetermined value, the time interval may have some problem, and the efficiency abnormal alert information is generated.

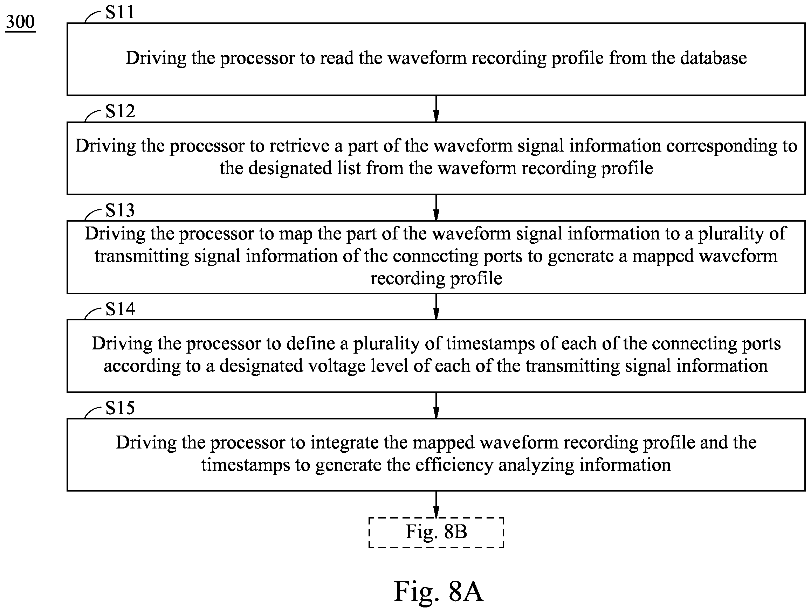

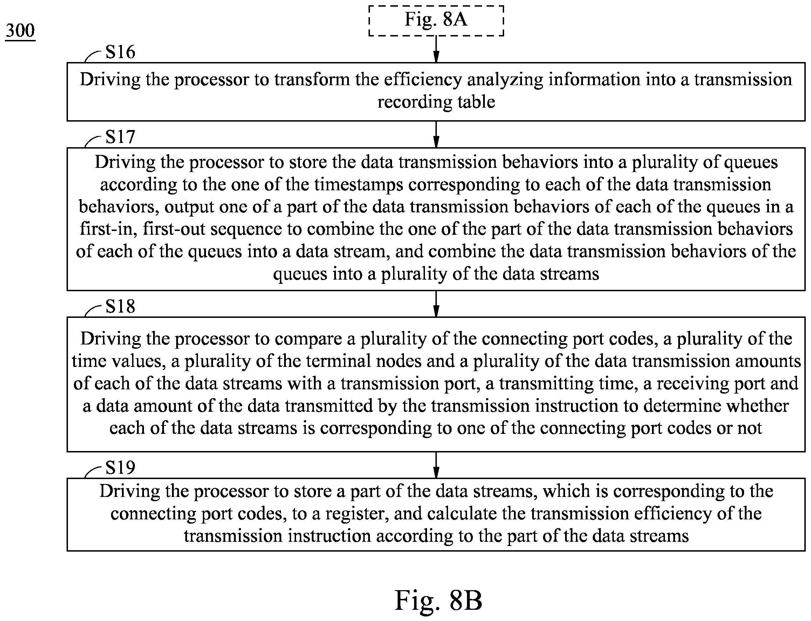

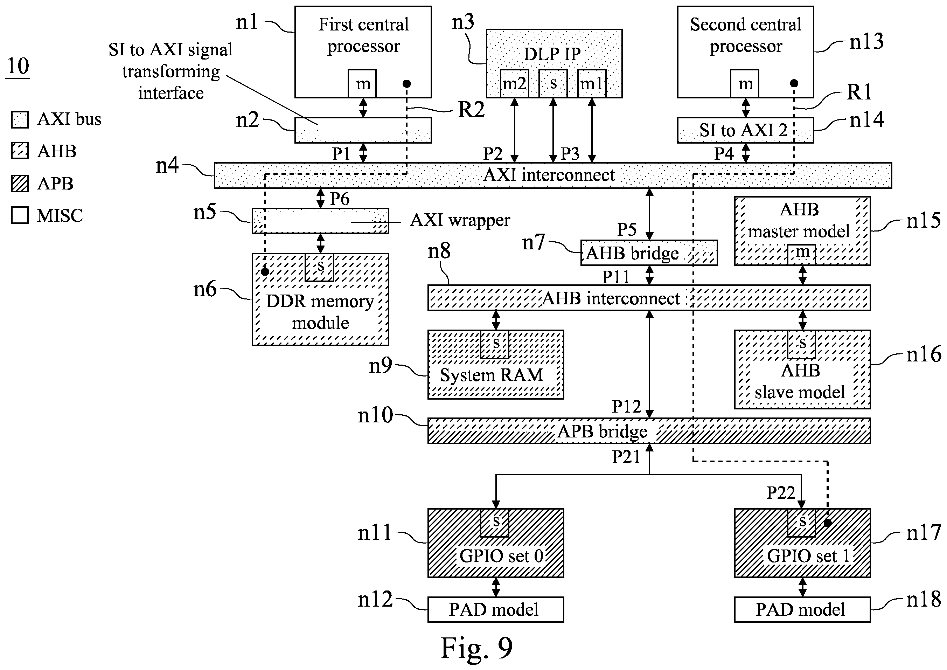

Please refer to Fig. 1, Fig. 8A, Fig. 8B and Fig. 9. Fig. 8A and Fig. 8B show a flow chart of a method 300 for reducing efficiency calculating time according to a fourth embodiment of the present disclosure, and the steps shown in Fig. 8B are continuing after the steps shown in Fig. 8A. Fig. 9 shows a schematic view of the method 300 for reducing efficiency calculating time in Fig. 8A and Fig. 8B applied to an AMBA. The method 300 for reducing efficiency calculating time includes steps S11, S12, S13, S14, S15, S16, S17, S18, S19. In the fourth embodiment, the steps S11, S12, S13, S14, S15 of the method 300 for reducing efficiency calculating time can be the same as the steps S01, S02, S03, S04, S05 of the method 200 for reducing efficiency calculating time of the second embodiment, respectively, and will not be described again. Further, the method 300 for reducing efficiency calculating time can further include the steps S16, S17, S18, S19.

For instance, in Fig. 9, the bus structure 10 may be implemented in accordance with the AMBA standard. The bus structure 10 may include the nodes n1, n2, n3, n4, n5, n6, n7, n8, n9, n10, n11, n12, n13, n14, n15, n16, n17, n18 (n1-n18), and the nodes n1-n18 are connected via the connecting ports. The connecting ports are corresponding to a plurality of connecting port codes P1, P2, P3, P4, P5, P6, P11, P12, P21, P22. A transmission route R1 includes the connecting port codes P4, P5, P11, P12, P21, P22. The transmission route R2 includes the connecting port codes P1, P6. The nodes n1-n18 are configured to represent an AXI bus, an AHB, an APB and a Minimal Instruction Set Computer (MISC) and interconnects of the aforementioned buses, but the present disclosure is not limited thereto. The node n1 corresponds to a first central processor, the node n2 corresponds to a SI to AXI signal transforming interface, the node n3 corresponds to a Deep Learning Processor (DLP) IP, the node n4 corresponds to an AXI interconnect, the node n5 corresponds to an AXI wrapper, the node n6 corresponds to a Double Data Rate (DDR) memory module, the node n7 corresponds to an AHB bridge, the node n8 corresponds to an AHB interconnect, the node n9 corresponds to a system Random-Access Memory (RAM), the node n10 corresponds to an APB bridge, the node n11 corresponds to a General Purpose Input / Output (GPIO) set 0, the node 12 corresponds to a Pin and Device (PAD) model, the node n13 corresponds to a second central processor, the node n14 corresponds to a SI to AXI 2 signal transforming interface, the node n15 corresponds to an AHB master model, the node n16 corresponds to an AHB slave model, the node n17 corresponds to a GPIO set 1, the node n18 corresponds to another PAD model. The DLP IP and the AXI interconnect are connected via the connecting port codes P2 and P3. A data transmitted from the node n13 to the node n18 passes through the connecting port codes P4, P5, P11, P12, P21 and P22. For example, a transmission instruction is transmitted from a processing unit of the AMBA to control the node n13 to transmit a data to the node n18, the node n13 is the transmitting port in the transmission instruction, and the node n18 is the receiving port in the transmission instruction. In the data transmission process, the data cannot be transmitted to the node n18 from the node n13 directly, the data need to pass through other nodes n14, n4, n7, n8, n10 and n17, to transmit the data via the connecting port codes P4, P5, P11, P12, P21 and P22 to the node n18.

In Fig. 8A, the steps S11, S12, S13, S14, S15 are performed to access a waveform recording profile PF of the nodes n1-n18 of the AMBA, retrieve the required waveform signal information S1 from the waveform recording profile PF, and map the waveform signal information S1 to the connecting port codes P1, P2, P3, P4, P5, P6, P11, P12, P21, P22 of the connecting ports between the nodes n1-n18 and the transmitting signal information thereof, generate the mapped waveform recording profile, and define the timestamps of the connecting ports to generate the efficiency analyzing information.

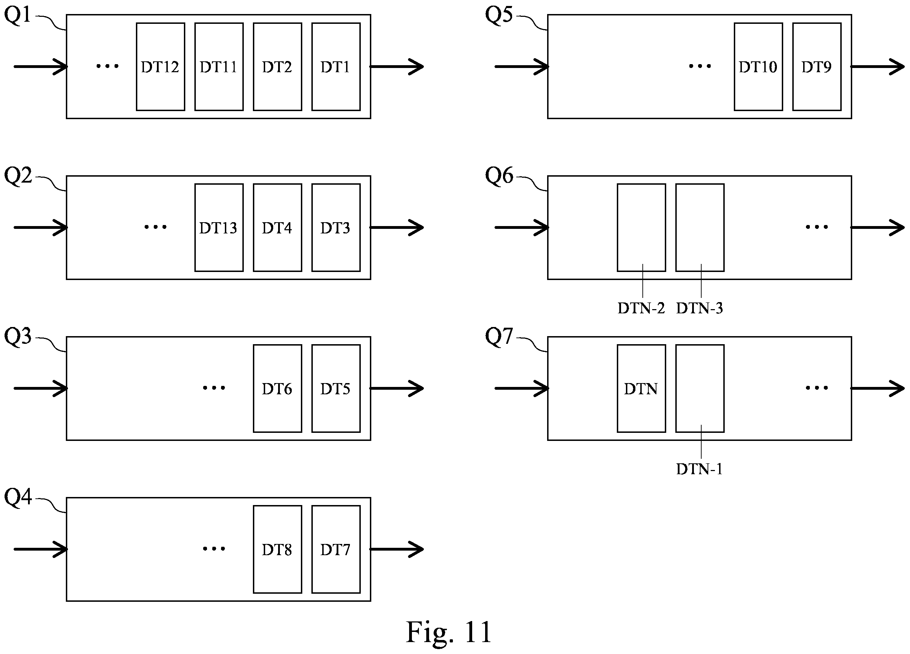

In Fig. 8B, the step S16 includes driving the processor 130 to transform the efficiency analyzing information into a transmission recording table. The transmission recording table includes a connecting port code, a time value, one of the timestamps, a terminal node and a data transmission amount of each of a plurality of data transmission behaviors between the nodes n1-n18. The step S17 includes driving the processor 130 to store the data transmission behaviors into a plurality of queues Q1, Q2, Q3, Q4, Q5, Q6, Q7 (in Fig. 11) according to the one of the timestamps corresponding to each of the data transmission behaviors, output one of a part of the data transmission behaviors of each of the queues Q1-Q7 in a first-in, first-out sequence to combine the one of the part of the data transmission behaviors of each of the queues Q1-Q7 into a data stream, and combine the data transmission behaviors of the queues Q1-Q7 into a plurality of the data streams. The step S18 includes driving the processor 130 to compare a plurality of the connecting port codes P4, P5, P11, P12, P21, P22, a plurality of the time values, a plurality of the terminal nodes and a plurality of the data transmission amounts of each of the data streams with a transmission port, a transmitting time, a receiving port and a data amount of the data transmitted by the transmission instruction to determine whether each of the data streams is corresponding to one of the connecting port codes P4, P5, P11, P12, P21, P22 or not. The transmission instruction is configured to control a transmitting port to transmit a data to a receiving port along a transmission route at a transmitting time. The step S19 includes driving the processor 130 to store a part of the data streams, which is corresponding to the connecting port codes P4, P5, P11, P12, P21, P22, to a register, and calculate the transmission efficiency of the transmission instruction according to the part of the data streams.

In detail, the transmission recording table can be listed in Table 2. The transmission recording table can be a data statistics profile developed by the C++ program language, but the present disclosure is not limited thereto.

**Table 2**

| Data transmission behaviors | Connecting port code | Timestamp | Time value (ns) | Address of terminal node |
|---|---|---|---|---|
| DT1 | P4 | 1 | 100 | 2689597440 |
| DT2 | P5 | 1 | 120 | 2689597440 |
| DT3 | P4 | 2 | 240 | 2689597440 |
| DT4 | P5 | 2 | 260 | 2689597440 |
| DT5 | P4 | 3 | 340 | 2689597440 |
| DT6 | P5 | 3 | 360 | 2689597440 |
| DT7 | P4 | 4 | 400 | 2689597440 |
| DT8 | P5 | 4 | 420 | 2689597440 |
| DT9 | P4 | 5 | 480 | 2689597440 |
| DT10 | P5 | 5 | 500 | 2689597440 |
| DT11 | P11 | 1 | 520 | 0 |
| DT12 | P12 | 1 | 520 | 0 |
| DT13 | P11 | 2 | 560 | 0 |
| ... | ... | ... | ... | ... |
| DTN-3 | P4 | 6 | 660 | 2689597440 |
| DTN-2 | P5 | 6 | 680 | 2689597440 |
| DTN-1 | P4 | 7 | 800 | 2689597440 |
| DTN | P5 | 7 | 820 | 2689597440 |

Please refer to Table 2, Table 2 lists the data transmission behaviors DT1, DT2, DT3, DT4, DT5, DT6, DT7, DT8, DT9, DT10, DT11, DT12, DT13-DTN-3, DTN-2, DTN-1 and DTN begin from the time value 0. Take the data transmission behavior DT1 as example, a signal variation of the connecting port code P4 occurred when the time value is 100 ns is the same as a designated voltage level of the first timestamp, therefore, the timestamp of the data transmission behavior DT1 is 1, and the address of the terminal node is "2689597440". As shown in the data transmission behaviors DT2-DTN in Table 2, the time values of the signal variations of the connecting port code P5 are all near to the connecting port code P4, and the timestamp of the connecting port code P5 are the same as the connecting port code P4. Therefore, the terminal node of the data transmission behavior DT1 is corresponding to the connecting port code P5, and "2689597440" is an address corresponded to the connecting port code P5.

In the fourth embodiment, when the connecting port code P4 reads a data from the connecting port code P5, all the operation corresponded to the first timestamp, the second timestamp, the third timestamp, the fourth timestamp and the fifth timestamp of the reading data should be completed.

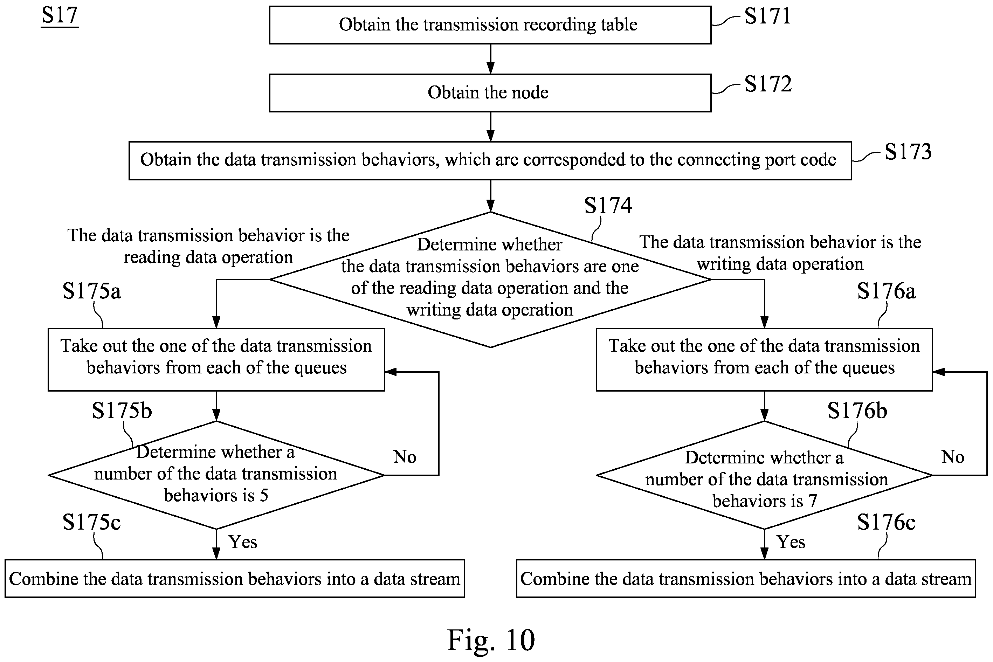

Please refer to Fig. 1, Fig. 8A to Fig. 11. Fig. 10 shows the step S17 of the method 300 for reducing efficiency calculating time of Fig. 8A and Fig. 8B. Fig. 11 shows the queues Q1-Q7 of the method 300 for reducing efficiency calculating time of Fig. 8A and Fig. 8B. The step S17 can include steps S171, S172, S173, S174, S175a, S175b, S175c, S176a, S176b, S176c. For instance, the step S171 is performed to obtain the transmission recording table of the data transmission behaviors DT1-DTN corresponding to the nodes n1-n18. The steps S172, S173 are performed to obtain the node n14 and the data transmission behaviors DT1, DT3, DT5, DT7, DT9, DTN-3 and DTN-1, which are corresponded to the connecting port code P4. The step S174 is performed to determine whether the present data transmission behaviors DT1, DT3, DT5, DT7, DT9, DTN-3 and DTN-1 are one of the reading data operation and the writing data operation according to the timestamp of the data transmission behaviors DT1, DT3, DT5, DT7, DT9, DTN-3 and DTN-1. In response to determine that the data transmission behaviors DT1, DT3, DT5, DT7, DT9, DTN-3 and DTN-1 are the reading data operation, the step S175a is performed. In response to determine that the data transmission behaviors DT1, DT3, DT5, DT7, DT9, DTN-3 and DTN-1 are the writing data operation, the step S176a is performed. Because a maximum value of the timestamps corresponding to the data transmission behaviors DT1, DT3, DT5, DT7, DT9, DTN-3 and DTN-1, which is corresponded to the connecting port code P4, is 7, the data transmission behaviors DT1, DT3, DT5, DT7, DT9, DTN-3 and DTN-1 corresponded to the connecting port code P4 is the writing data operation. The step S176a is performed to take out the data transmission behaviors DT1, DT3, DT5, DT7, DT9, DTN-3 and DTN-1 from each the queues Q1-Q7, respectively, in the first-in, first-out sequence. The step S176b is performed to determine whether a number of the data transmission behaviors DT1, DT3, DT5, DT7, DT9, DTN-3, DTN-1 taken out from the queues Q1-Q7 is 7, that is, determine whether all the data transmission behaviors DT1, DT3, DT5, DT7, DT9, DTN-3, DTN-1 corresponded to the connecting port code P4 are taken out. The step S176c is performed to combine the data transmission behaviors DT1, DT3, DT5, DT7, DT9, DTN-3 and DTN-1 taken out from the queues Q1-Q7 into a data stream. Moreover, in response to determine that the data transmission behaviors DT1, DT3, DT5, DT7 and DT9 are the reading data operation, the step S175a is performed to take out the data transmission behaviors DT1, DT3, DT5, DT7 and DT9 from each the queues Q1-Q5, respectively, in the first-in, first-out sequence. The step S175b is performed to determine whether a number of the data transmission behaviors DT1, DT3, DT5, DT7 and DT9 taken out from the queues Q1-Q5 is 5, that is, determine whether all the data transmission behaviors DT1, DT3, DT5, DT7 and DT9 corresponded to the connecting port code P4 are taken out. The step S175c is performed to combine the data transmission behaviors DT1, DT3, DT5, DT7 and DT9 taken out from the queues Q1-Q5 into a data stream.

In other words, the data stream storing step S17 is performed to take out the data transmission behaviors DT1, DT3, DT5, DT7, DT9, DTN-3 and DTN-1, which are corresponded to the connecting port code P4, from the queues Q1-Q7, and combine the data transmission behaviors DT1, DT3, DT5, DT7, DT9, DTN-3 and DTN-1 into a data stream, and take out the data transmission behaviors DT2, DT4, DT6, DT8, DT10, DTN-2 and DTN, which are corresponded to the connecting port code P5, from the queues Q1-Q7, and combine the data transmission behaviors DT2, DT4, DT6, DT8, DT10, DTN-2 and DTN into another data stream.

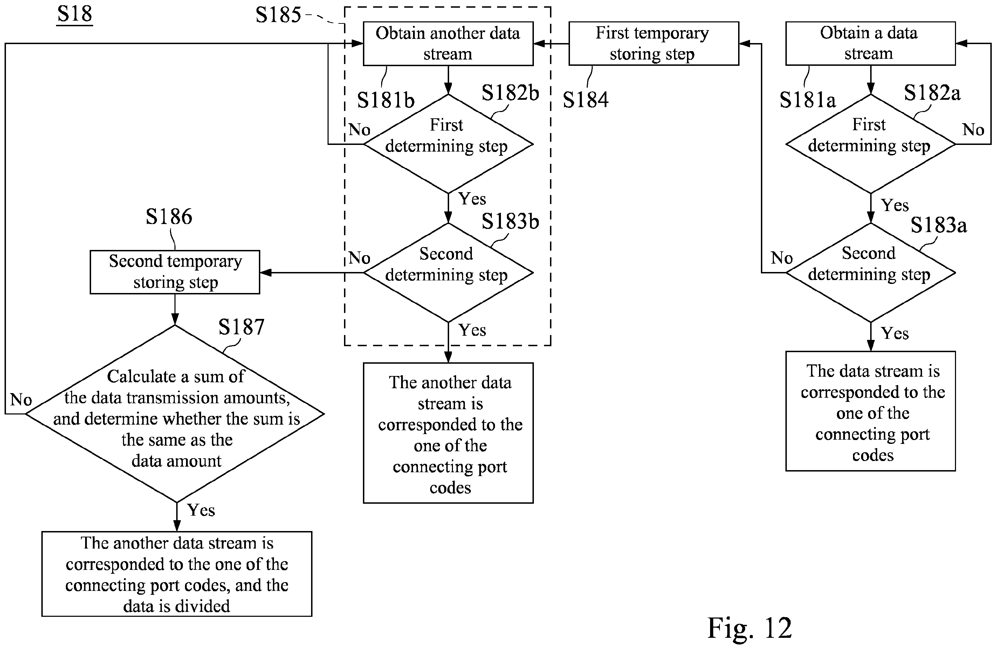

Please refer to Fig. 1, Fig. 8A to Fig. 12. Fig. 12 shows the step S18 of the method 300 for reducing efficiency calculating time of Fig. 8A and Fig. 8B. The step S18 can include a first determining step S182a and a second determining step S183a. The first determining step S182a includes configuring the processor 130 to determine whether at least one of the connecting port codes P4, P5, P11, P12, P21, P22 and the terminal nodes of the data transmission behaviors corresponding to one of the data streams is the same as at least one of the transmitting port and the receiving port of the transmission instruction, and determine whether a transmitting starting time of the one of the data streams is later than or the same as the transmitting time of the transmission instruction to generate a first determining result. The second determining step S183a includes configuring the processor 130 to determine whether the data transmission amount of the one of the data streams is equal to the data amount of the data transmitted by the transmission instruction to generate a second determining result. In response to determine that the first determining result is true and the second determining result is true, the one of the data streams is one of the connecting port codes P4, P5, P11, P12, P21 and P22.

In response to determine that the first determining result is true and the second determining result is false, the comparing step S18 can further include a first temporary storing step S184, a step S185, a second temporary storing step S186 and a step S187. The first temporary storing step S184 includes configuring the processor 130 to store the one of the data streams into one register. The step S185 includes configuring the processor 130 to perform the first determining step S182b and the second determining step S183b to another one of the data streams. The second temporary storing step S186 includes configuring the processor 130 to store another one of the data streams into the register, when the first determining result corresponding to another one of the data streams is true and the second determining result corresponding to the another one of the data streams is false. The step S187 includes configuring the processor 130 to calculate a sum of the data transmission amounts in the register, and determine whether the sum is the same as the data amount of the data. In response to determine that the first determining result is true and the second determining result is true, the one of the data streams and another one of the data streams are both the one of the connecting port codes P4, P5, P11, P12, P21 and P22.

In detail, the step S18 can further include the steps S181a and S181b. The step S181a is performed to obtain a data stream. The first determining step S182a is performed to determine at least one of the connecting port codes P4, which is corresponded to the data transmission behaviors DT1, DT3, DT5, DT7, DT9, DTN-3, DTN-1 of the data stream and the terminal node (the connecting port code P5) is the same as the transmitting port (the connecting port code P4) and the receiving port (the connecting port code P12), and whether the transmitting starting time (100 ns) of the data stream is later than the transmitting time of the transmission instruction. If any of the nodes n1-n18 and the terminal node corresponded to the present data stream is different from the transmitting port and the receiving port of the transmission instruction, the present data stream may not be one of the connecting port codes P4, P5, P11, P12, P21, P22 of the transmission route R1 of the transmission instruction. If both of the nodes n1-n18 and the terminal node corresponded to the present data stream are the same as the transmitting port and the receiving port of the transmission instruction and the transmitting starting time of the present data stream is earlier than the transmitting time of the transmission instruction, the present data stream occurred before the transmission instruction. Thus, the present data stream may not be one of the connecting port codes P4, P5, P11, P12, P21 and P22 of the transmission route R1 of the transmission instruction.

In response to determine that the first determining result of the first determining step S182a is false, the step S181a is performed again to obtain another data stream. In response to determine that the first determining result is true, the second determining step S183a is performed. When the data amount of the data transmitted by the transmission instruction is 8 bytes, and the data transmission amount of the present data stream is also 8 bytes, the second determining result is true, and the present data stream is determined as one of the connecting port codes P4, P5, P11, P12, P21 and P22. If the data amount of the data transmitted by the transmission instruction is 8 bytes, and the data transmission amount of the present data stream is 4 bytes, the second determining result is false, and the first temporary storing step S184 is performed. The first temporary storing step S184 is performed to store the present data stream in the aforementioned register, and the step S185 is performed. The step S185 includes performing the step S181b, the first determining step S182b and the second determining step S183b. The step S181b is performed to obtain another data stream, and perform the first determining step S182b on another data stream. In response to determine that the first determining result of the first determining step S182b is false, the step S181b is performed to obtain other data stream. In response to determine that the first determining result is true, the second determining step S183b is performed. If the data amount of the data transmitted by the transmission instruction is 8 bytes, and the data transmission amount of another data stream is also 8 bytes, the second determining result is true, and another data stream is determined as one of the connecting port codes P4, P5, P11, P12, P21 and P22. If the data amount of the data transmitted by the transmission instruction is 8 bytes, and the data transmission amount of another data stream is 4 bytes, the second determining result is false, and the second temporary step S186 is performed to store another data stream into the aforementioned register. The step S187 is performed to calculate a sum of the data transmission amounts of the data streams in the register, and determine whether the sum is the same as the data amount of the data. If the data transmission amount of the present data stream and the data transmission amount of another data stream are both 4 bytes, the sum of the data transmission amounts of the present data stream and another data stream is the same as the data amount of the data, and a storing address of the present data stream and a storing address of the another data stream are continuous at the same node, that is, a transmission instruction with a 8 byte data is divided into two pieces of 4 byte data to transmit. Thus, the present data stream and another data stream are both correspond to one of the connecting port codes P4, P5, P11, P12, P21 and P22. In detail, if a data of the present data stream is stored in addresses 100-103 of the connecting port code P5, and a data of another data stream is stored in addresses 104-107 of the connecting port code P5, the storing addresses of the present data stream and another data stream at the connecting port code P5 are continuous. Thus, the method 300 for reducing efficiency calculating time of the present disclosure can calculate the data transmitting efficiency crossing different buses.

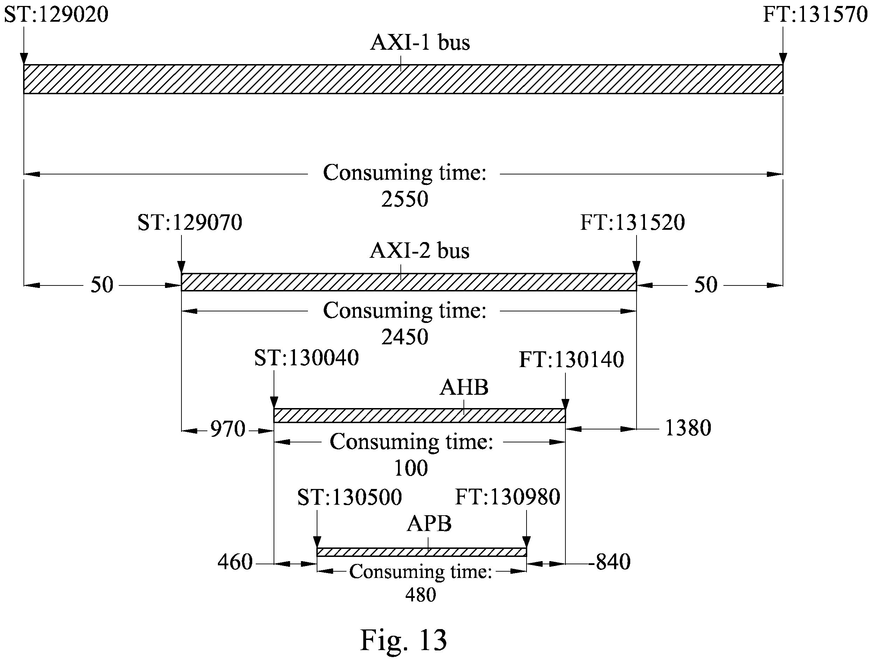

Please refer to Fig. 1, Fig. 8A, Fig. 8B and Fig. 13. Fig. 13 shows a schematic view of a transmission efficiency of the method 300 for reducing efficiency calculating time of Fig. 8A and Fig. 8B. Fig. 13 shows a transmission instruction transmitting a data from the AXI-1 bus to the APB, which passing through the AXI-2 bus and the AHB, and also shows the transmitting starting time ST and the transmitting ending time FT of a data stream corresponding to each of the buses. The transmitting starting time ST of the AXI-1 bus is 129020 ns, and the data is transmitted to the AXI-2 bus after 50 ns. The transmitting starting time ST of the AXI-2 bus is 129070 ns, and the data is transmitted to the AHB after 970 ns. The transmitting starting time ST of the AHB is 130040 ns, and the data is transmitted to the APB after 460 ns. The APB returns the transmission completed reply to the AXI-1 bus in the aforementioned sequence. The transmitting ending time FT of the AXI-1 bus, that is, the time when the AXI-1 bus receives the transmission completed reply, is 131570 ns. The total consuming time of the transmission instruction is 2550 ns.

A computer readable recording medium stores a program for a processor (not shown) capable of transforming a waveform recording profile of a bus structure into an efficiency analyzing information so as to analyze a transmission efficiency of a transmission instruction, to execute the method 200, 200a, 300 for reducing efficiency calculating time. The computer readable recording medium can be a CR-ROM, a flexible disk (FD), a CD-R, a digital versatile disk (DVD), a USB medium and a flash memory, but the present disclosure is not limited thereto.

According to the aforementioned embodiments and examples, the advantages of the present disclosure are described as follows.
1. The system for reducing efficiency calculating time of the present disclosure retrieves a part of the waveform signal information without calculating all the waveform signal information in the waveform recording profile, thereby reducing the computing data amount of the efficiency analyzation, shorten the analyzing computing time and increasing the computing speed.
2. The method for reducing efficiency calculating time of the present disclosure can calculate the state of each of the timestamps during the data transmission accurately, and find out the interval with abnormal transmitting speed, thereby clearing the abnormal problem effectively.
3. The method for reducing efficiency calculating time of the present disclosure can calculate the data transmitting efficiency crossing different buses.

## Claims

1. A method (200) for reducing efficiency calculating time, which is configured to transform a waveform recording profile (PF) of a bus structure (10) into an efficiency analyzing information so as to analyze a transmission efficiency of a transmission instruction, the method (200) for reducing efficiency calculating time **characterized in** comprising:
driving a processor (130) to read the waveform recording profile (PF) from a database (120), wherein the waveform recording profile (PF) comprises a plurality of waveform signal information (S1) corresponding to the bus structure (10);
driving the processor (130) to retrieve a part of the waveform signal information (S1) corresponding to a designated list (L1) from the waveform recording profile (PF), wherein the designated list (L1) is corresponding to a plurality of nodes (n1, n2, n3, n4, n5, n6, n7, n8, n9, n10, n11, n12, n13, n14, n15, n16, n17, n18) of the bus structure (10);
driving the processor (130) to map the part of the waveform signal information (S1) to a plurality of transmitting signal information (ACLK, ARADDR, ARVALID, ARREADY) of a plurality of connecting ports to generate a mapped waveform recording profile, wherein any one of the connecting ports is configured to connect two of the nodes (n1, n2, n3, n4, n5, n6, n7, n8, n9, n10, n11, n12, n13, n14, n15, n16, n17, n18);
driving the processor (130) to define a plurality of timestamps of each of the connecting ports according to a designated voltage level of each of the transmitting signal information (ACLK, ARADDR, ARVALID, ARREADY); and
driving the processor (130) to integrate the mapped waveform recording profile and the timestamps to generate the efficiency analyzing information.

2. The method (200) for reducing efficiency calculating time of claim 1, wherein the waveform recording profile (PF) comprises one of an IEEE 1364 Value Change Dump (VCD) profile, a Fast Signal Data Base (FSDB) profile and a Signal Value profile.

3. The method (200) for reducing efficiency calculating time of any of claims 1-2, wherein when one of the nodes (n1, n2, n3, n4, n5, n6, n7, n8, n9, n10, n11, n12, n13, n14, n15, n16, n17, n18) initiates a data transmission to another one of the nodes (n1, n2, n3, n4, n5, n6, n7, n8, n9, n10, n11, n12, n13, n14, n15, n16, n17, n18), the timestamps of one of the connecting ports between the one and the another one of the nodes (n1, n2, n3, n4, n5, n6, n7, n8, n9, n10, n11, n12, n13, n14, n15, n16, n17, n18) comprises:
a first timestamp corresponding to a time point when the one of the nodes (n1, n2, n3, n4, n5, n6, n7, n8, n9, n10, n11, n12, n13, n14, n15, n16, n17, n18) initiates an address communicating request;
a second timestamp (T2) corresponding to a time point when the another one of the nodes (n1, n2, n3, n4, n5, n6, n7, n8, n9, n10, n11, n12, n13, n14, n15, n16, n17, n18) replies the address communicating request;
a third timestamp corresponding to a time point when the one of the nodes (n1, n2, n3, n4, n5, n6, n7, n8, n9, n10, n11, n12, n13, n14, n15, n16, n17, n18) transmits a data;
a fourth timestamp corresponding to a time point when the another one of the nodes (n1, n2, n3, n4, n5, n6, n7, n8, n9, n10, n11, n12, n13, n14, n15, n16, n17, n18) receives the data; and
a fifth timestamp corresponding to a time point when the data is transmitted.

4. The method (200) for reducing efficiency calculating time of any of claims 1-3, wherein the timestamps further comprises:
a sixth timestamp corresponding to a time point when the another one of the nodes (n1, n2, n3, n4, n5, n6, n7, n8, n9, n10, n11, n12, n13, n14, n15, n16, n17, n18) requests to establish a reply channel; and
a seventh timestamp corresponding to a time point when the one of the nodes (n1, n2, n3, n4, n5, n6, n7, n8, n9, n10, n11, n12, n13, n14, n15, n16, n17, n18) receives the reply channel being established.

5. The method (200) for reducing efficiency calculating time of any of claims 1-4, further comprising:
driving the processor (130) to calculate the transmission efficiency of the nodes (n1, n2, n3, n4, n5, n6, n7, n8, n9, n10, n11, n12, n13, n14, n15, n16, n17, n18) of the bus structure (10) according to the timestamps of each of the connecting ports.

6. The method (200) for reducing efficiency calculating time of any of claims 1-5, further comprising:
driving the processor (130) to generate an efficiency abnormal alert information when the transmission efficiency is not conform to a predetermined value.

7. The method (200) for reducing efficiency calculating time of any of claims 1-6, further comprising:
driving the processor (130) to transform the efficiency analyzing information into a transmission recording table, wherein the transmission recording table comprises a connecting port code (P1, P2, P3, P4, P5, P6, P11, P12, P21, P22), a time value, one of the timestamps, a terminal node and a data transmission amount of each of a plurality of data transmission behaviors (DT1, DT2, DT3, DT4, DT5, DT6, DT7, DT8, DT9, DT10, DT11, DT12, DT13, DTN, DTN-1, DTN-2, DTN-3) between the nodes (n1, n2, n3, n4, n5, n6, n7, n8, n9, n10, n11, n12, n13, n14, n15, n16, n17, n18);
driving the processor (130) to store the data transmission behaviors (DT1, DT2, DT3, DT4, DT5, DT6, DT7, DT8, DT9, DT10, DT11, DT12, DT13, DTN, DTN-1, DTN-2, DTN-3) into a plurality of queues (Q1, Q2, Q3, Q4, Q5, Q6, Q7) according to the one of the timestamps corresponding to each of the data transmission behaviors (DT1, DT2, DT3, DT4, DT5, DT6, DT7, DT8, DT9, DT10, DT11, DT12, DT13, DTN, DTN-1, DTN-2, DTN-3), output one of a part of the data transmission behaviors (DT1, DT2, DT3, DT4, DT5, DT6, DT7, DT8, DT9, DT10, DT11, DT12, DT13, DTN, DTN-1, DTN-2, DTN-3) of each of the queues (Q1, Q2, Q3, Q4, Q5, Q6, Q7) in a first-in, first-out sequence to combine the one of the part of the data transmission behaviors (DT1, DT2, DT3, DT4, DT5, DT6, DT7, DT8, DT9, DT10, DT11, DT12, DT13, DTN, DTN-1, DTN-2, DTN-3) of each of the queues (Q1, Q2, Q3, Q4, Q5, Q6, Q7) into a data stream, and combine the data transmission behaviors (DT1, DT2, DT3, DT4, DT5, DT6, DT7, DT8, DT9, DT10, DT11, DT12, DT13, DTN, DTN-1, DTN-2, DTN-3) of the queues (Q1, Q2, Q3, Q4, Q5, Q6, Q7) into a plurality of the data streams;
driving the processor (130) to compare a plurality of the connecting port codes (P1, P2, P3, P4, P5, P6, P11, P12, P21, P22), a plurality of the time values, a plurality of the terminal nodes and a plurality of the data transmission amounts of each of the data streams with a transmission port, a transmitting time, a receiving port and a data amount of a data transmitted by the transmission instruction to determine whether each of the data streams is corresponding to one of the connecting port codes (P1, P2, P3, P4, P5, P6, P11, P12, P21, P22) or not; and
driving the processor (130) to store a part of the data streams, which is corresponding to the connecting port codes (P1, P2, P3, P4, P5, P6, P11, P12, P21, P22), to a register, and calculate the transmission efficiency of the transmission instruction according to the part of the data streams.

8. A system (100) for reducing efficiency calculating time, which is configured to transform a waveform recording profile (PF) of a bus structure (100 into an efficiency analyzing information so as to analyze a transmission efficiency of a transmission instruction, the system (100) for reducing efficiency calculating time **characterized in** comprising:
a database (120) signally connected to the bus structure (10), and comprising:
the waveform recording profile (PF) comprising a plurality of waveform signal information (S1) corresponding to the bus structure (10); and
a designated list (L1) corresponding to a plurality of nodes (n1, n2, n3, n4, n5, n6, n7, n8, n9, n10, n11, n12, n13, n14, n15, n16, n17, n18) of the bus structure (10), and corresponding to a part of the waveform signal information (S1); and
a processor (130) signally connected to the database (120), and is configured to implement a method (200) for reducing efficiency calculating time comprising:
reading the waveform recording profile (PF);
retrieving the part of the waveform signal information (S1) corresponding to the designated list (L1) from the waveform recording profile (PF);
mapping the part of the waveform signal information (S1) to a plurality of transmitting signal information (ACLK, ARADDR, ARVALID, ARREADY) of a plurality of connecting ports of the bus structure (10) to generate a mapped waveform recording profile, wherein any one of the connecting ports is configured to connect two of the nodes (n1, n2, n3, n4, n5, n6, n7, n8, n9, n10, n11, n12, n13, n14, n15, n16, n17, n18);
defining a plurality of timestamps of each of the connecting ports according to a designated voltage level of each of the transmitting signal information (ACLK, ARADDR, ARVALID, ARREADY); and
integrating the mapped waveform recording profile and the timestamps to generate the efficiency analyzing information.

9. The system (100) for reducing efficiency calculating time of claim 8, wherein the waveform recording profile (PF) comprises one of an IEEE 1364 Value Change Dump profile, a Fast Signal Data Base profile and a Signal Value profile.

10. The system (100) for reducing efficiency calculating time of any of claims 8-9, wherein when one of the nodes (n1, n2, n3, n4, n5, n6, n7, n8, n9, n10, n11, n12, n13, n14, n15, n16, n17, n18) initiates a data transmission to another one of the nodes (n1, n2, n3, n4, n5, n6, n7, n8, n9, n10, n11, n12, n13, n14, n15, n16, n17, n18), the timestamps of one of the connecting ports between the one and the another one of the nodes (n1, n2, n3, n4, n5, n6, n7, n8, n9, n10, n11, n12, n13, n14, n15, n16, n17, n18) comprises:
a first timestamp corresponding to a time point when the one of the nodes (n1, n2, n3, n4, n5, n6, n7, n8, n9, n10, n11, n12, n13, n14, n15, n16, n17, n18) initiates an address communicating request;
a second timestamp (T2) corresponding to a time point when the another one of the nodes (n1, n2, n3, n4, n5, n6, n7, n8, n9, n10, n11, n12, n13, n14, n15, n16, n17, n18) replies the address communicating request;
a third timestamp corresponding to a time point when the one of the nodes (n1, n2, n3, n4, n5, n6, n7, n8, n9, n10, n11, n12, n13, n14, n15, n16, n17, n18) transmits a data;
a fourth timestamp corresponding to a time point when the another one of the nodes (n1, n2, n3, n4, n5, n6, n7, n8, n9, n10, n11, n12, n13, n14, n15, n16, n17, n18) receives the data; and
a fifth timestamp corresponding to a time point when the data is transmitted.

11. The system (100) for reducing efficiency calculating time of any of claims 8-10, wherein the timestamps further comprises:
a sixth timestamp corresponding to a time point when the another one of the nodes (n1, n2, n3, n4, n5, n6, n7, n8, n9, n10, n11, n12, n13, n14, n15, n16, n17, n18) requests to establish a reply channel; and
a seventh timestamp corresponding to a time point when the one of the nodes (n1, n2, n3, n4, n5, n6, n7, n8, n9, n10, n11, n12, n13, n14, n15, n16, n17, n18) receives the reply channel being established.

12. The system (100) for reducing efficiency calculating time of any of claims 8-11, wherein the processor (130) is configured to implement the method (200) for reducing efficiency calculating time further comprising:
calculating the transmission efficiency of the nodes (n1, n2, n3, n4, n5, n6, n7, n8, n9, n10, n11, n12, n13, n14, n15, n16, n17, n18) of the bus structure (10) according to the timestamps of each of the connecting ports.

13. The system (100) for reducing efficiency calculating time of any of claims 8-12, wherein the processor (130) is configured to implement the method (200) for reducing efficiency calculating time further comprising:
generating an efficiency abnormal alert information when the transmission efficiency is not conform to a predetermined value.

14. The system (100) for reducing efficiency calculating time of any of claims 8-13, wherein the processor (130) is configured to implement the method (200) for reducing efficiency calculating time further comprising:
transforming the efficiency analyzing information into a transmission recording table, wherein the transmission recording table comprises a connecting port code (P1, P2, P3, P4, P5, P6, P11, P12, P21, P22), a time value, one of the timestamps, a terminal node and a data transmission amount of each of a plurality of data transmission behaviors (DT1, DT2, DT3, DT4, DT5, DT6, DT7, DT8, DT9, DT10, DT11, DT12, DT13, DTN, DTN-1, DTN-2, DTN-3) between the nodes (n1, n2, n3, n4, n5, n6, n7, n8, n9, n10, n11, n12, n13, n14, n15, n16, n17, n18);
storing the data transmission behaviors into a plurality of queues (Q1, Q2, Q3, Q4, Q5, Q6, Q7) according to the one of the timestamps corresponding to each of the data transmission behaviors (DT1, DT2, DT3, DT4, DT5, DT6, DT7, DT8, DT9, DT10, DT11, DT12, DT13, DTN, DTN-1, DTN-2, DTN-3), outputting one of a part of the data transmission behaviors (DT1, DT2, DT3, DT4, DT5, DT6, DT7, DT8, DT9, DT10, DT11, DT12, DT13, DTN, DTN-1, DTN-2, DTN-3) of each of the queues (Q1, Q2, Q3, Q4, Q5, Q6, Q7) in a first-in, first-out sequence to combine the one of the part of the data transmission behaviors (DT1, DT2, DT3, DT4, DT5, DT6, DT7, DT8, DT9, DT10, DT11, DT12, DT13, DTN, DTN-1, DTN-2, DTN-3) of each of the queues (Q1, Q2, Q3, Q4, Q5, Q6, Q7) into a data stream, and combining the data transmission behaviors (DT1, DT2, DT3, DT4, DT5, DT6, DT7, DT8, DT9, DT10, DT11, DT12, DT13, DTN, DTN-1, DTN-2, DTN-3) of the queues (Q1, Q2, Q3, Q4, Q5, Q6, Q7) into a plurality of the data streams;
comparing a plurality of the connecting port codes (P1, P2, P3, P4, P5, P6, P11, P12, P21, P22), a plurality of the time values, a plurality of the terminal nodes and a plurality of the data transmission amounts of each of the data streams with a transmission port, a transmitting time, a receiving port and a data amount of a data transmitted by the transmission instruction to determine whether each of the data streams is corresponding to one of the connecting port codes (P1, P2, P3, P4, P5, P6, P11, P12, P21, P22) or not; and
storing a part of the data streams, which is corresponding to the connecting port codes (P1, P2, P3, P4, P5, P6, P11, P12, P21, P22), to a register, and calculating the transmission efficiency of the transmission instruction according to the part of the data streams.

15. A computer readable recording medium storing a program for a processor (130) capable of transforming a waveform recording profile (PF) of a bus structure (10) into an efficiency analyzing information so as to analyze a transmission efficiency of a transmission instruction, to execute a method (200) for reducing efficiency calculating time **characterized in** comprising:
driving the processor (130) to read the waveform recording profile (PF) from a database (120), wherein the waveform recording profile (PF) comprises a plurality of waveform signal information (S1) corresponding to the bus structure (10);
driving the processor (130) to retrieve a part of the waveform signal information (S1) corresponding to a designated list (L1) from the waveform recording profile (PF), wherein the designated list (L1) is corresponding to a plurality of nodes (n1, n2, n3, n4, n5, n6, n7, n8, n9, n10, n11, n12, n13, n14, n15, n16, n17, n18) of the bus structure (10);
driving the processor (130) to map the part of the waveform signal information (S1) to a plurality of transmitting signal information (ACLK, ARADDR, ARVALID, ARREADY of a plurality of connecting ports to generate a mapped waveform recording profile, wherein any one of the connecting ports is configured to connect two of the nodes (n1, n2, n3, n4, n5, n6, n7, n8, n9, n10, n11, n12, n13, n14, n15, n16, n17, n18);
driving the processor (130) to define a plurality of timestamps of each of the connecting ports according to a designated voltage level of each of the transmitting signal information (ACLK, ARADDR, ARVALID, ARREADY); and
driving the processor (130) to integrate the mapped waveform recording profile and the timestamps to generate the efficiency analyzing information.

16. The computer readable recording medium of claim 15, wherein the waveform recording profile (PF) comprises one of an IEEE 1364 Value Change Dump profile, a Fast Signal Data Base profile and a Signal Value profile.

17. The computer readable recording medium of any of claims 15-16, wherein when one of the nodes (n1, n2, n3, n4, n5, n6, n7, n8, n9, n10, n11, n12, n13, n14, n15, n16, n17, n18) initiates a data transmission to another one of the nodes (n1, n2, n3, n4, n5, n6, n7, n8, n9, n10, n11, n12, n13, n14, n15, n16, n17, n18), the timestamps of one of the connecting ports between the one and the another one of the nodes (n1, n2, n3, n4, n5, n6, n7, n8, n9, n10, n11, n12, n13, n14, n15, n16, n17, n18) comprises:
a first timestamp corresponding to a time point when the one of the nodes (n1, n2, n3, n4, n5, n6, n7, n8, n9, n10, n11, n12, n13, n14, n15, n16, n17, n18) initiates an address communicating request;
a second timestamp (T2) corresponding to a time point when the another one of the nodes (n1, n2, n3, n4, n5, n6, n7, n8, n9, n10, n11, n12, n13, n14, n15, n16, n17, n18) replies the address communicating request;
a third timestamp corresponding to a time point when the one of the nodes (n1, n2, n3, n4, n5, n6, n7, n8, n9, n10, n11, n12, n13, n14, n15, n16, n17, n18) transmits a data;
a fourth timestamp corresponding to a time point when the another one of the nodes (n1, n2, n3, n4, n5, n6, n7, n8, n9, n10, n11, n12, n13, n14, n15, n16, n17, n18) receives the data; and
a fifth timestamp corresponding to a time point when the data is transmitted.

18. The computer readable recording medium of any of claims 15-17, wherein the timestamps further comprises:
a sixth timestamp corresponding to a time point when the another one of the nodes (n1, n2, n3, n4, n5, n6, n7, n8, n9, n10, n11, n12, n13, n14, n15, n16, n17, n18) requests to establish a reply channel; and
a seventh timestamp corresponding to a time point when the one of the nodes (n1, n2, n3, n4, n5, n6, n7, n8, n9, n10, n11, n12, n13, n14, n15, n16, n17, n18) receives the reply channel being established.

19. The computer readable recording medium of any of claims 15-18, the processor (130) is configured to execute the method (200) for reducing efficiency calculating time further comprising:
driving the processor (130) to calculate the transmission efficiency of the nodes (n1, n2, n3, n4, n5, n6, n7, n8, n9, n10, n11, n12, n13, n14, n15, n16, n17, n18) of the bus structure (10) according to the timestamps of each of the connecting ports; and
driving the processor (130) to generate an efficiency abnormal alert information when the transmission efficiency is not conform to a predetermined value.

20. The computer readable recording medium of any of claims 15-19, the processor (130) is configured to execute the method (200) for reducing efficiency calculating time further comprising:
driving the processor (130) to transform the efficiency analyzing information into a transmission recording table, wherein the transmission recording table comprises a connecting port code (P1, P2, P3, P4, P5, P6, P11, P12, P21, P22), a time value, one of the timestamps, a terminal node and a data transmission amount of each of a plurality of data transmission behaviors (DT1, DT2, DT3, DT4, DT5, DT6, DT7, DT8, DT9, DT10, DT11, DT12, DT13, DTN, DTN-1, DTN-2, DTN-3) between the nodes (n1, n2, n3, n4, n5, n6, n7, n8, n9, n10, n11, n12, n13, n14, n15, n16, n17, n18);
driving the processor (130) to store the data transmission behaviors (DT1, DT2, DT3, DT4, DT5, DT6, DT7, DT8, DT9, DT10, DT11, DT12, DT13, DTN, DTN-1, DTN-2, DTN-3) into a plurality of queues (Q1, Q2, Q3, Q4, Q5, Q6, Q7) according to the one of the timestamps corresponding to each of the data transmission behaviors (DT1, DT2, DT3, DT4, DT5, DT6, DT7, DT8, DT9, DT10, DT11, DT12, DT13, DTN, DTN-1, DTN-2, DTN-3), output one of a part of the data transmission behaviors (DT1, DT2, DT3, DT4, DT5, DT6, DT7, DT8, DT9, DT10, DT11, DT12, DT13, DTN, DTN-1, DTN-2, DTN-3) of each of the queues (Q1, Q2, Q3, Q4, Q5, Q6, Q7) in a first-in, first-out sequence to combine the one of the part of the data transmission behaviors (DT1, DT2, DT3, DT4, DT5, DT6, DT7, DT8, DT9, DT10, DT11, DT12, DT13, DTN, DTN-1, DTN-2, DTN-3) of each of the queues (Q1, Q2, Q3, Q4, Q5, Q6, Q7) into a data stream, and combine the data transmission behaviors (DT1, DT2, DT3, DT4, DT5, DT6, DT7, DT8, DT9, DT10, DT11, DT12, DT13, DTN, DTN-1, DTN-2, DTN-3) of the queues (Q1, Q2, Q3, Q4, Q5, Q6, Q7) into a plurality of the data streams;
driving the processor (130) to compare a plurality of the connecting port codes (P1, P2, P3, P4, P5, P6, P11, P12, P21, P22), a plurality of the time values, a plurality of the terminal nodes and a plurality of the data transmission amounts of each of the data streams with a transmission port, a transmitting time, a receiving port and a data amount of a data transmitted by the transmission instruction to determine whether each of the data streams is corresponding to one of the connecting port codes (P1, P2, P3, P4, P5, P6, P11, P12, P21, P22) or not; and
driving the processor (130) to store a part of the data streams, which is corresponding to the connecting port codes (P1, P2, P3, P4, P5, P6, P11, P12, P21, P22), to a register, and calculate the transmission efficiency of the transmission instruction according to the part of the data streams.
